# EUROPÄISCHE PATENTSCHRIFT

(11) **EP 3 568 594 B1**
(45) Veröffentlichungstag und Bekanntmachung des Hinweises auf die Patenterteilung: **20.07.2022**
(21) Anmeldenummer: 18702899.8
(22) Anmeldetag: 11.01.2018
(51) Int. Cl.: F04B 33/00

(54) **SAUGPUMPE UND UNTERDRUCK-HALTEVORRICHTUNG MIT SAUGPUMPE UND VERFAHREN ZUM ANBRINGEN EINER UNTERDRUCK-HALTEVORRICHTUNG**
SUCTION PUMP AND DEPRESSION-RETAINING DEVICE WITH SUCTION PUMP AND METHOD FOR FIXATION OF A DEPRESSION-RETAINING DEVICE
POMPE D'ASPIRATION ET DISPOSITIF DE RETENUE PAR DÉPRESSION AVEC UNE POMPE D'ASPIRATION ET PROCÉDÉ POUR FIXATION D'UN DISPOSITIF DE RETENUE PAR DÉPRESSION.

(30) Priorität: 11.01.2017 DE 202017100097 U
(43) Veröffentlichungstag der Anmeldung: 20.11.2019
(73) Patentinhaber: Schmidt, Patrick, 21218 Seevetal (DE)
(72) Erfinder: Schmidt, Patrick, 21218 Seevetal (DE)
(74) Vertreter: Müller Schupfner & Partner Patent- und Rechtsanwaltspartnerschaft mbB
(86) Internationale Anmeldenummer: PCT/DE2018/100016
(87) Internationale Veröffentlichungsnummer: WO 2018/130248

(56) Entgegenhaltungen:
- WO-A1-01/20177
- WO-A2-2014/117766
- WO-A2-2014/117766
- CH-A- 108 067
- CH-A- 108 067
- DE-U1- 29 916 197
- DE-U1- 29 916 197
- US-A1- 2009 175 747
- US-A1- 2009 238 702
- US-A1- 2009 238 702

## Beschreibung

### Einleitung

Die Erfindung bezieht sich auf eine Saugpumpe mit Saugrohr und Saugkolben zum Erzeugen eines Unterdrucks in einer Unterdruck-Haltevorrichtung, auf ein Set bestehend aus der Unterdruck-Haltevorrichtung und der Saugpumpe und auf ein Verfahren zum Anbringen der Unterdruck-Haltevorrichtung.

### Stand der Technik und Aufgabe

Unterdruck-Haltevorrichtungen sind z. B. als Saugnapfbefestigungen bekannt. Herkömmliche Saugnapfbefestigungen weisen einen Saugnapf auf, der aus einem elastischen Kunststoffmaterial hergestellt ist und einen luftdichten Abschluss zwischen Saugnapf und glatter gasundurchlässiger Anlagefläche, z. B. einer Badezimmerkachel, gewährleisten soll. Der für die Haftwirkung erforderliche Unterdruck in der Unterdruckkammer wird durch Aufdrücken des tellerförmigen Saugnapfes auf eine Anlagefläche hergestellt, wobei Luft aus der Unterdruckkammer des Saugnapfes entweicht bevor sich der Saugnapf festlegt und durch die Rückstellkraft des elastischen Materials ein Unterdruck hergestellt wird.

Eine mit Unterdruck arbeitende, wieder lösbare Haltevorrichtung ist aus der WO 01/20177 A1 und der WO 2014/117766 A2, bekannt. Diese Haltevorrichtung besitzt einen Haltekörper, der mittels einer Dichtung aus elastischem Material an eine gasundurchlässige Anlagefläche luftdicht anlegbar ist und an dem Vorrichtungen für verschiedene Tragefunktionen montierbar sind. Der Haltekörper weist eine zur Anlagefläche hin offene Unterdruckkammer mit einer elastischen Dichtung zur Anlagefläche hin und zur Unterdruckkammer hin ein Ventil auf, über das mittels einer Saugvorrichtung in der Saugkammer ein Unterdruck erzeugbar ist, wenn der Haltekörper an die Anlagefläche angelegt ist. Die Haltevorrichtung kann mittels der Tragefunktionen beispielsweise Badezimmerzubehör, wie Seifenschalen oder Aufhänghaken, an Kachelwänden festhalten.

Nach dem Öffnen des Ventils ist die Haltevorrichtung wieder abnehmbar. Auf die Oberseite des hohlen Haltekörpers nach der WO 01/20177 A1 ist ein nach oben offenes Saugrohr mit einer Gummidichtung aufsetzbar.

Durch Herausziehen des Saugkolbens aus dem Saugrohr wird aufgrund der damit verbundenen Saugwirkung in der Unterdruckkammer der gewünschte Unterdruck erzeugt, der den Haltekörper der Unterdruck-Haltevorrichtung an die Anlagefläche ansaugt. Verlässt der Saugkolben das Saugrohr am nach oben offenen Ende, strömt verbunden mit einem "plopp" auf einen Schlag Umgebungsluft in den Saugkolben und verschließt das Ventil, indem dieses in seinen Ventilsitz aufgrund des äußeren Umgebungsdruckes gepresst wird.

Der Aufbau hat den Nachteil, dass der Saugkolben das Saugrohr am Ende eines Herausziehvorganges unweigerlich verlässt und für einen wiederholten Saugvorgang das Saugrohr vom Ventilsitz abgenommen, der Saugkolben wieder in das Saugrohr eingeführt werden muss und nach unten geschoben werden muss. Erst dann kann das Saugrohr wieder mit dem Ventilsitz luftdicht gekoppelt werden und der Saugvorgang wieder gestartet werden. Die in der WO 2014/117766 A2 offenbarte Saugpumpe weist hinsichtlich des Ventils der Saugpumpe einen komplizierten Aufbau auf.

Das Dokument US 2009/175747 offenbart eine Saugpumpe mit einer Dichtung am Kolben und einer Ausnehmung.

Aufgabe der Erfindung ist es, den aus dem Stand der Technik bekannten Ablauf für ungeübte Benutzer zu vereinfachen und die Anzahl der separat vorliegenden Teile eines solchen Sets auf zwei, nämlich Saugpumpe und Unterdruck-Haltevorrichtung, zu beschränken, sowie eine technisch einfache Saugpumpe bereitzustellen.

### Zusammenfassung der Erfindung

Die Aufgabe wird erfindungsgemäß mit einer Saugpumpe aus Saugrohr und Saugkolben gemäß Anspruch 1 bzw. dem Set gemäß Anspruch 6 gelöst. Bevorzugte Ausführungsformen sind Gegenstand der Unteransprüche oder nachfolgend beschrieben.

Die erfindungsgemäße Saugpumpe umfasst ein Saugrohr, welches einen Kolbeninnenraum aufweist, und einen im Saugrohr längs einer Saugrohrwand geführten Saugkolben, wobei der Saugkolben an einem Ende einen Kolbenkopf mit Kolbendichtung aufweist, die Kolbendichtung sich dichtend innen an die Saugrohrwand des Saugkolbens anlegt und der Kolbenkopf mit Kolbendichtung von der Saugrohröffnung weg in dem Saugrohr mit Kolbeninnenraum längs eines Saugweges verfahrbar ist.

Das Saugrohr am Ende des Saugweges weist einen oder mehrere Belüftungs-Durchbrüche in der Saugrohrwand auf und die Kolbendichtung an den Belüftungs-Durchbrüchen vorbeiführbar ist, so dass auf einen Stoß Umgebungsluft in den Kolbeninnenraum des Saugrohrs einströmt.

Die Saugpumpe aus Saugrohr und Saugkolben weist gegen Ende des Auszugsweges zumindest einen Durchbruch in der Saugrohrwand des Saugrohrs auf, der von dem Kolbenkopf des Saugkolbens mit Kolbendichtung passiert wird und dabei den Saugvorgang spontan durch eindringende Umgebungsluft beendet. Durch den zumindest einen Durchbruch gelangt, wenn die Kolbendichtung den zumindest einen Durchbruch passiert hat, Außenluft spontan in das Saugrohr und hebt den Unterdruck im Saugrohr auf. Der Saugvorgang ist damit schlagartig beendet und das Ventil der Unterdruck-Haltevorrichtung, auf die die Saugpumpe aufgesetzt ist, das zunächst durch den Unterdruck aus seinem Ventilsitz gehoben wurde, wird auf seinen Ventilsitz gedrückt und sperrt die Umgebungsluft von dem Unterdruck in der Unterdruckkammer ab.

Die Saugpumpe besteht vorzugsweise aus Kunststoff, z. B. aus einem schlagfesten Kunststoff, wie ABS.

### Detaillierte Beschreibung der Erfindung

Die Unterdruck-Haltevorrichtung zum Anbringen von Gegenständen an eine im Wesentlichen gasdichte Anlagefläche weist auf:
- einen Haltekörper, der eine Unterdruckkammer ausbildet, wobei in der Unterdruckkammer nach dem Anlegen an die Anlagefläche ein Unterdruck erzeugbar ist,
- zumindest eine Dichtung, die die Unterdruckkammer nach außen hin gasdicht gegen die Anlagefläche verschließt und z.B. umlaufend in dem Haltekörper eingelassen ist,
- zumindest eine Öffnung als Ende einer Verbindung von Unterdruckkammer mit äußerer Umgebung mit zumindest einem Ventil, welches ein gasdichtes Schließen und Öffnen der Verbindung Unterdruckkammer mit äußerer Umgebung gewährleistet,
- Mittel zum Herstellen einer lösbaren, im Wesentlichen gasdichten Kupplung von der Saugrohröffnung mit der Saugpumpe zum Erzeugen eines Unterdruckes und
- einen Träger wie einen Haken oder einen Adapter zur Befestigung von Gegenständen an der Unterdruck-Haltevorrichtung.

Das Befestigen der Unterdruck-Haltevorrichtung mittels der Saugpumpe an einer Anlagefläche umfasst folgende Schritte:
- Aufsetzen der Unterdruck-Haltevorrichtung auf der Anlagefläche,
- Herstellen einer lösbaren, im Wesentlichen gasdichten Kupplung von der nach außen gerichteten Öffnung der Unterdruck-Haltevorrichtung aufweisend das Ventil mit der Saugpumpe,
- Erzeugen eines Unterdruckes in der Unterdruckkammer mit der Saugpumpe durch einen, vorzugsweise zwei oder drei Saugzüge.

Zum Anbringen des Haltekörpers an der Unterdruck-Haltevorrichtung sind alle im wesentlichen luftundurchlässigen Untergründe, wie Keramik, Steingut, kunststoffbeschichtete Hölzer, Glas oder Metallflächen geeignet. Insbesondere ist für einen dauerhaften Halt auch bei rauer Struktur kein die Halteflächen beschädigendes Bohren oder sonstiges Einbringen von Schrauben oder Nägeln notwendig. Die erfindungsgemäße Unterdruck-Haltevorrichtung ermöglicht eine reversible und zerstörungsfreie Befestigung.

Die Unterdruck-Haltevorrichtung kann z. B. im Haushalt, in Wohnmobilen, Segelbooten, Motorjachten, auf Holzvertäfelungen, im Messebau oder im medizinischen Bereich etwa in Operationssälen Anwendung finden, insbesondere immer dort, wo nicht geschraubt oder geklebt werden kann oder darf.

Die Haltevorrichtung dient der Anbringung von Utensilien, wie Seifenschalen oder Aufhängehaken, vorzugsweise an Wänden von Nassräumen, wie Badezimmern, Toiletten oder Küchen oder an Glas- oder Kunststoffscheiben. Die Anwendung ist allerdings nicht darauf beschränkt. Voraussetzung ist, dass für die Anbringung luftundurchlässige Untergründe wie z.B. Keramik-, Glas-, Kunststoff- oder Metallflächen zur Verfügung stehen.

Die Unterdruck-Haltevorrichtung besteht vorzugsweise aus Kunststoff, z.B. aus einem schlagfesten Kunststoff, wie ABS (Acrylnitril-Butadien-Styrol) oder Polyamid und ist weiterhin zur Auflagefläche hin vorzugsweise rund bzw. oval oder auch quadratisch ausgebildet. Der luftdichte Abschluss der Unterdruckkammer zur Anlagefläche wird z.B. durch eine Flachdichtung, die in eine Aufnahmefläche am Rand der Unterdruckkammer eingesetzt ist, bewirkt.

Die Haltevorrichtungsdichtung, die die Unterdruckkammer nach außen hin gasdicht gegen die Anlagefläche verschließt, ist vorzugsweise eine ggf. ein- und/oder beidseitig mit Ausgleichsrippen versehene Flachdichtung aus elastischem Material, wie Gummi. Ein Bespiel einer solchen Flachdichtung ist aus der WO 2014/117766 A2 bekannt. Eine solche Dichtung mit ein oder mehreren U-Profilen und mit entsprechender Ausgestaltung der Stege an der Haltevorrichtung kann auch vorliegend eingesetzt werden.

Die Haltevorrichtungsdichtung ist vorzugsweise aus einem relativ weichen elastischen, insbesondere gummielastischem, Material gefertigt (z.B. ein thermoplastisches Elastomer) und weist insbesondere eine Härte von 15 bis 30 ShoreA, besonders bevorzugt 15 bis 20 ShoreA auf. Geeignete Materialien für die Dichtung und das Ventil sind synthetische Kautschuke und thermoplastische Elastomere. Die Dichtung ist umlaufend ausgebildet und vorzugsweise als Dichtungsring ausgebildet.

Die Verbindung von Unterdruckkammer mit äußerer Umgebung ist vorzugsweise in Form eines Domes ausgebildet, der eine konusförmige Ausnehmung am oberen Ende in Form einer sich nach außen öffnenden kegel-, kugel- oder halbkugelförmige Auflagefläche zur Aufnahme eines Ventils aufweist. Der obere Rand des Doms mit dem Ventilsitz kann durch eine Kappe verschlossen werden, die abnehmbar ist. Wenn gewünscht, kann die Kappe das elastische Ventil zusätzlich in den Ventilsitz pressen. Die Kappe bewirkt dann, dass das elastische Ventil durch die innere Fläche des Kappendeckels zusätzlich abdichtend in die Auflagefläche des Doms gedrückt wird.

Das Ventil ist nach einer bevorzugten Ausführungsform, um ein sicheres Aufliegen zu gewährleisten, entsprechend der Auflagefläche des Doms ebenfalls kegel-, kugel- oder halbkugelförmig ausgebildet.

Das Ventil verjüngt sich zur Unterdruckkammer hin. Es fungiert als Absaug- / Dichtungsventil. Vorzugsweise wird das Ventil mit Hilfe elastischer Mittel, z.B. eines elastischen Bandes oder Stabes oder einer Feder, die einstückig Teil des Ventils sein können, ggf. unter Vorspannung, in der Auflagefläche gehalten. Hierbei ist der Dom vorzugsweise so ausgebildet, dass er für das Ende des elastischen Mittels einen Halt bietet. Z.B. kann das Ventil so ausgebildet sein, dass es sich zunächst kugel-, halbkugel- oder kegelförmig nach unten verjüngt und hierbei nach unten band- oder stabartig weiter ausläuft. Am Ende des Bandes oder Stabes findet sich ein Widerhalt, der in Form einer oder mehrerer, vorzugsweise zweier, abstehender Zapfen oder eines Keils ausgebildet sein kann. Das Ventil besteht zumindest in den Bereichen, die mit der Auflagefläche in Kontakt stehen, aus einem gummielastischem Material, so dass das Ventil vorzugsweise zumindest im oberen kugel-, halbkugel- oder kegelförmigen Bereich, z.B. unter Einwirkung von Kräften, wie sie mit den Fingern ausgeübt werden, reversibel deformierbar ist. Die Unterdruck-Haltevorrichtung kann durch Öffnen des Ventils wieder leicht von der Anlagefläche entfernt werden. Das Ventil wird geöffnet, indem es durch seitlichen Druck z.B. mit dem Finger deformiert bzw. bewegt wird, wobei eine Verbindung von Unterdruckkammer mit äußerer Umgebung hergestellt wird und ein Druckausgleich zwischen Umgebungsdruck und Unterdruckkammer bewirkt wird. Das Ventil kann aus demselben Material wie die Haltevorrichtungsdichtung gefertigt sein. Das Ventil weist insbesondere eine Härte von 15 bis 30 ShoreA, besonders bevorzugt 15 bis 20 ShoreA auf.

Durch Herausziehen der Kolbenstange aus dem Saugrohr wird das Ventil durch den erzeugten Unterdruck aus der Vorspannung leicht angehoben und die noch vorhandene Atmosphäre aus der Unterdruckkammer weitgehend abgesogen. In dem Moment, in dem der Saugkolben die oberen Durchbrechungen in der Wand des Saugrohres passiert, wird das Ventil durch die Vorspannung und die nunmehr aufgebaute Druckdifferenz gegen seine Auflagefläche gedrückt und verschließt die Unterdruckkammer gegen den Außendruck luftdicht. Beim Passieren der Durchbrechung ist es wichtig, dass auf einen Schlag eine große Menge an Umgebungsluft in den Saugkolben eindringt, damit das Ventil der Unterdruck-Haltevorrichtung durch den plötzlichen Druckwechsel schnellstmöglich schließt.

Nach einer anderen Ausgestaltung ist das Ventil in Form eines lippenförmigen Spaltes ausgebildet, wobei die Lippen konusförmig zu einem Schlitz zusammenlaufen und sich bei Unterdruck zusammendrücken.

Das Saugrohr ist durch Aufsetzen auf die Kuppelfläche, die den Ventilsitz umgibt lösbar und im wesentlichen gasdicht mit der Unterdruck-Haltevorrichtung kuppelbar. Das Saugrohr hat einen runden oder ovalen Querschnitt.

Das Saugrohr weist am oberen Ende (Ende des Saugweges) einen Anschlag auf, der ein völliges Herausziehen des Kolbenkopfes des Saugkolbens aus dem Saugrohr verhindert. Mehrere Saugvorgänge können damit schneller aufeinander folgen. Nach einer Ausgestaltung weist die Saugrohrwand der Saugpumpe am Ende des Saugweges zwei bis vier Entlüftungs-Durchbrüche auf.

Das Saugrohr weist am unteren Ende (Anfang des Saugweges) eine Saugrohrdichtung auf, die die gasdichte Kuppelung mit der Unterdruck-Haltevorrichtung unterstützt und vorzugsweise das Ventil passgenau umschließt. Die untere Saugrohröffnung des Saugrohrs wird durch z.B. eine aufgesetzte Saugrohrdichtung etwa in Form eines Rundgummis mit U-Profil abgeschlossen.

Der Saugkolben weist an einem Ende eine Zugstange mit Haltegriff und an seinem anderen Ende einen Kolbenkopf auf.

Nach einer bevorzugten Ausgestaltung der Erfindung ist vorgesehen, dass der Kolbenkopf des Saugkolbens mit einer radial um den Schaft herum angebrachten ersten Saugdichtungsscheibe und beabstandet hiervon mit einer zweiten Saugdichtungsscheibe versehen ist, wobei in die zweite Saugdichtungsscheibe vom äußeren Rand der Saugdichtungsscheibe in Richtung auf das Zentrum der Saugdichtungsscheibe wenigstens eine Ausnehmung vorgesehen ist, vorzugsweise zwei oder drei Ausnehmungen.

Zwischen den beiden Saugdichtungsscheiben ist ein Dichtungsring angeordnet, vorzugsweise mit leichtem Spiel, z.B. einem Spiel von 5 bis 100%, vorzugsweise 10 bis 20% der Stärke des Dichtungsrings. Anders ausgedrückt beträgt der Abstand der Saugdichtungsscheiben vorzugsweise 0 bis 100%, insbesondere 5 bis 50 %, und besonders bevorzugt 10 bis 20 % mehr als die Stärke des Dichtungsrings (jeweils im entspannten Zustand). Wenn z.B. der Dichtungsring eine Stärke von 2,65 mm hat, beträgt der Innenabstand der Saugdichtungsscheiben 3 mm. Vorzugsweise ist der Außendurchmesser des Dichtungsrings genau so groß wie der Innendurchmesser des Saugkolbens, vorzugsweise geringfügig größer, z.B. 1 bis 10%, insbesondere 1 bis 3% größer. Wenn z.B. der Dichtungsring einen Außendurchmesser von 24,3 mm hat, hat das Saugrohr einen Innendurchmesser von 24 mm.

Der Dichtungsring ist zwischen die beiden Saugdichtungsscheiben eingelegt. Bei einer Bewegung des Saugkolbens in Saugrichtung legt sich der Dichtungsring an die erste Saugdichtungsscheibe an, um bei der Saugbewegung den Ringspalt der ersten Saugdichtungsscheibe mit dem Saugkolben zu verschließen. Ist der erste Ringspalt von dem Dichtungsring abgedeckt, also verschlossen, dann entsteht beim Herausziehen des Saugkolbens im Saugrohr auf der Seite zur Unterdrucckammer ein Unterdruck.

Die erste Saugdichtungsscheibe weist vorzugsweise eine abgerundete Innenkante auf, damit sich der Dichtungsring besser abdichtend in den ersten Ringspalt legen kann.

Die Ausnehmung(en) in der zweiten Saugdichtungsscheibe führen einen Druckausgleich beiderseits der Saugdichtungsscheibe herbei, wenn der Saugkolben in das Saugrohr hineingefahren wird und der Dichtungsring sich an die zweite Saugdichtungsscheibe andrückt. Die hierbei komprimierte Luft schiebt sich im Bereich der Ausnehmung an dem Dichtungsring vorbei. So wird eine Kompression der Luft im Fuß des Saugrohrs verhindert.

Durch ein etwaiges Spiel des Dichtungsrings wandert der Dichtungsring nach unten und legt sich an der ersten Saugdichtungsscheibe an, wenn ein Unterdruck im Saugrohr aufgebaut wird und der Saugkolben zum Saugrohrende gezogen wird.

Bei einer Stoßbewegung des Kolbenkopfes zum Boden des Saugrohres hin wandert der Dichtungsring bei einem etwaigen Spiel der Saugdichtungsscheiben nach oben und legt sich an den Ringspalt der zweiten Saugdichtungsscheibe an, wobei die Ausnehmungen freibleiben bzw. die Dichtung Durchlässe an diesen freigeben kann und so ein Druckausgleich zwischen beiden Seiten der Saugdichtungsscheibe erfolgen kann.

Die Dichtung des Kolbenkopfes ist nach dieser Ausgestaltung als Scheibe oder als O-Ring ausgebildet, vorzugsweise als O-Ring. Die Dichtung des Kolbenkopfes weist insbesondere eine Härte von größer 50 ShoreA auf.

Nach einer zweiten Ausgestaltung der Erfindung ist vorgesehen, dass statt der Durchbrüche in der zweiten Saugdichtungsscheibe, nahe dem ankoppelnden Ende des Saugrohres in dem Saugrohr Durchbrüche vorgesehen sind, die außenseitig mit einer elastischen Gummimanschette verschlossen sind. Die Entlüftung des Innenraumes des Saugkolbens erfolgt dadurch, dass die Entlüftungs-Durchbrüche außenseitig mit einer elastischen Gummimanschette verschlossen sind und der Überdruck über die Entlüftungs-Durchbrüche abgeführt wird, indem diese durch den Überdruck Luftpassagen nach Außen freigeben. Beim Niederfahren des Saugkolbens gelangt Luft an der Manschette vorbei nach außen. Bei Unterdruck im Saugrohr schließen diese. Nach dieser Ausführungsform kann der Kolbenkopf eine herkömmliche Gummilippendichtung zum Saugrohr hin aufweisen bzw. zwei als Vollkörper ausgebildete Saugdichtungsscheiben (ohne Ausnehmung) zwischen denen der Dichtungsring festgesetzt ist oder es ist ein O-Ring in eine Nut des Kolbenkopfes aufgezogen.

Im Folgenden wird der Gegenstand der Erfindung anhand der Figuren 1 bis 7 beispielhaft erläutert. Es zeigen:
Fig.1 eine Saugpumpe nach der Erfindung in schaubildlicher Darstellung,
Fig. 2 die Saugpumpe nach Fig. 1 im Schnitt,
Fig. 3 die Unterduck-Haltevorrichtung in schaubildlicher Darstellung,
Fig. 4 die Unterduck-Haltevorrichtung nach Fig. 3 im Schnitt,
Fig.5 den Kolbenkopf mit untenliegendem Dichtring (anliegend an die erste (geschlossene) Saugdichtungsscheibe) während des Saugvorganges in schaubildlicher Darstellung,
Fig.6 den Kolbenkopf mit obenliegendem Dichtring (anliegend an die zweite Saugdichtungsscheibe mit zwei Ausnehmungen) während des Niederdrückens des Saugkolbens in schaubildlicher Darstellung,
Fig.7 den Saugkolben der Saugpumpe (ohne Dichtring) in schaubildlicher Ansicht, mit den Ausnehmungen in der zweiten Saugdichtungsscheibe.

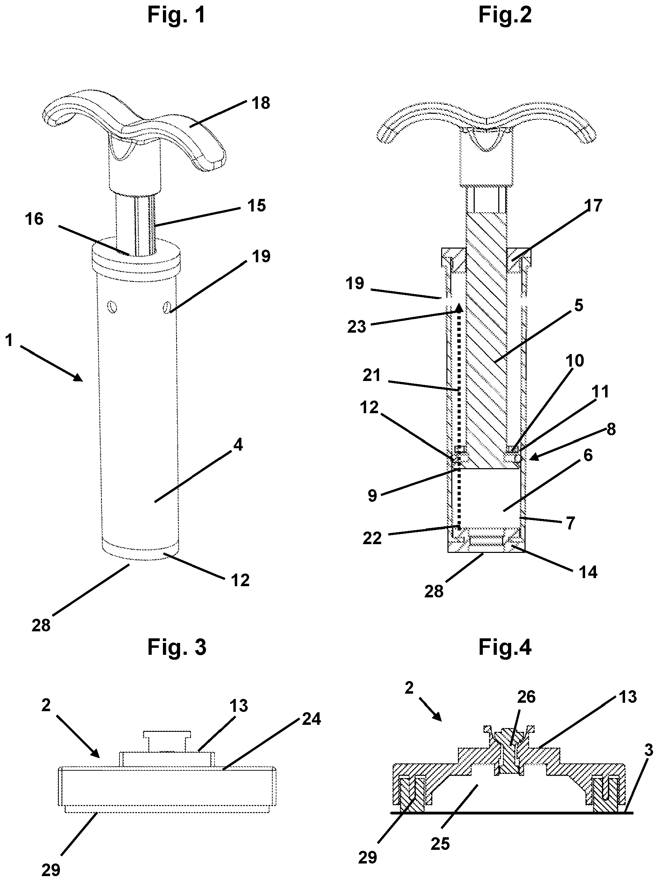

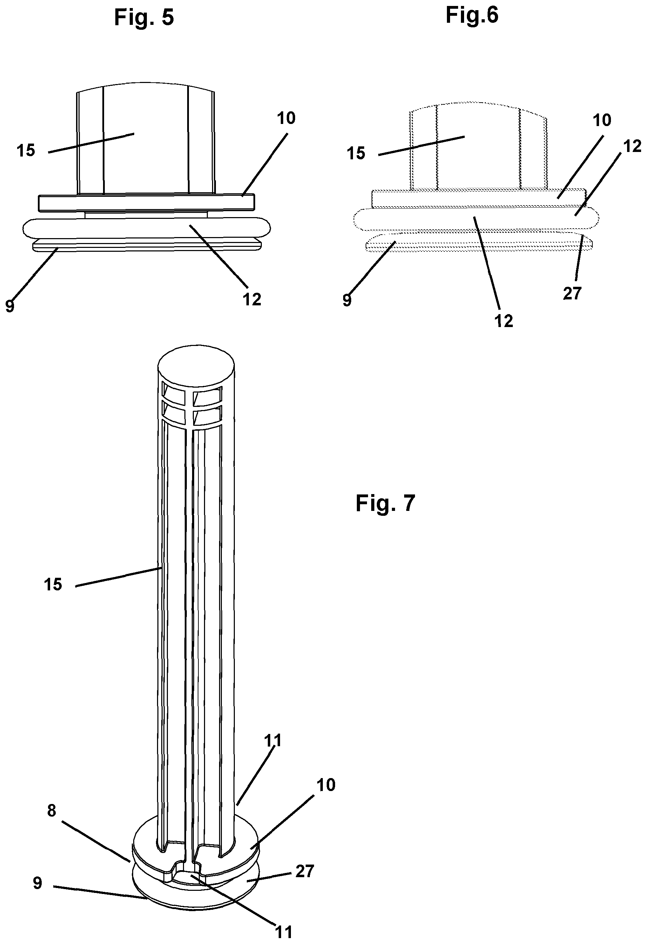

Die in Fig.1 und in Fig. 2 im Schnitt dargestellte Saugpumpe 1 koppelt lösbar mit einer Unterdruck-Haltevorrichtung 2, wie exemplarisch in Fig. 3 dargestellt, um diese auf einer Anlagefläche 3 festzulegen. Die Saugpumpe 1 weist ein Saugrohr 4 und einen in dem Saugrohr 4 verschiebbaren Saugkolben 5 auf. An dem einen Ende des Saugkolbens 5 ist ein Kolbenkopf 8 vorgesehen mit zumindest zwei Saugdichtungsscheiben 9 und 10. In der zweiten Saugdichtungsscheibe 10 sind zwei in Richtung auf das Zentrum der Saugdichtungsscheibe 10 eingebrachte Ausnehmungen 11 vorgesehen (siehe Fig.7). Zwischen erster Saugdichtungsscheibe 9 und zweiter Saugdichtungsscheibe 10 ist ein O-Ring 12 mit leichtem Spiel angeordnet. Dieser O-Ring 12 wird aufgrund seines äußeren Durchmessers, der etwa dem inneren Saugkolbendurchmesser entspricht, unverlierbar zwischen den beiden Saugdichtungsscheiben 9 und 10 am Saugkolben 5 gehalten. Die beiden Saugdichtungsscheiben 9 und 10 haben ebenfalls etwa den inneren Saugkolbendurchmesser, so dass sich nur ein dünner Spalt ausbildet.

Das Saugrohr 4 wird für die Saugvorgänge luftdicht auf die Ankuppelfläche 13 aufgesetzt. Das luftdichte Aufsitzen erfolgt unterstützt von der Saugrohrdichtung 14 am Ende des Saugkolbens.

Am dem zum Kolbenkopf 8 des Saugkolben 5 gegenüberliegenden Ende ist eine Kolbenzugstange 15 durch eine Öffnung 16 in dem oberen Anschlag 17 des Saugrohres 4 geführt. Am Ende der Kolbenzugstange 15 findet sich eine Zughaltevorrichtung 18 in Form eines Handgriffes.

Fig.1 zeigt auch, dass das Saugrohr 4 an seinem zweiten Ende, das dem Ankuppelende entgegengesetzt ist, einen Anschlag 17 aufweist, der ein völliges Herausziehen des Saugkolbens 5 aus dem Saugrohr 4 verhindert. Wiederholte Saugvorgänge können damit schneller aufeinander folgen. Der Anschlag 17 kann ein auf das Saugrohrende aufgesetzter, z.B. geklebter, Abschlussdeckel sein.

Die Saugpumpe 1 dient dem Erzeugen eines Unterdruckes in dem Höhlung 25 der Unterdruckkammer der Unterdruckhaltevorrichtung gemäß Fig. 3 und Fig. 4, die lösbar mit einem Haltekörper 24 an einer im wesentlichen gasdichten Anlagefläche 3 befestigt wird. Der Haltekörper 24 ist quadratisch mit abgerundeten Ecken und tellerförmig. Die Anlagefläche 3 kann beispielsweise eine Keramikwand in Küche oder Badezimmer, oder eine Fensterscheibe sein.

Die Verbindung zwischen der Saugpumpe 1 und dem Haltekörper 2 wird durch ein lösbares Ankuppeln der Saugpumpe 1 an den Haltekörper 24 herbeigeführt, indem die Dichtung 14 an die Ankuppelfläche 13 gasdicht angepresst wird.

Der Haltekörper 2 weist eine nach unten offene Höhlung 25 auf und am äußeren Körperrand eine auf die Anlagefläche 3 weisende Dichtung. Wird der Haltekörper mit der Dichtung 29 an die Anlagefläche 3 angelegt, dann entsteht aus der offenen Höhlung 25 eine geschlossene Unterdruckkammer, die nur noch über das Ventil 26 zugänglich ist, das von der Saugpumpe 1 umschlossen wird, wenn diese gekoppelt ist.

Ohne einen Saugvorgang befindet sich der Dichtring 12 lose zwischen erster Saugdichtungsscheibe 9 und zweiter Saugdichtungsscheibe 10. Der Dichtring 12 ist als O-Ring ausgebildet, dessen innerer Freiraum einen größeren Durchmesser aufweist als der Durchmesser des Kolbens zwischen den Saugdichtungsscheiben 9 und 10. Demnach hat der Dichtring 12 auch insofern Spiel. Ist die Saugpumpe 1 mit dem Saugrohr 4 gasdicht auf die Ankuppelfläche 13 aufgesetzt, dann kann der Saugvorgang beginnen. Hierzu wird der Saugkolben 5 am Handgriff 18 erfasst und bis zum Anschlag 17 herausgezogen. Dabei wird zunächst der Dichtring 12 (unterstützt durch die Reibung) an die erste Saugdichtungsscheibe 9 angesaugt wie dies in Fig. 5 gezeigt ist und verschließt den Ringspalt. Dies wird durch die abgerundete Innenkante 27 der Saugdichtungsscheibe 9 begünstigt. Bei weiterem Hochziehen des Saugkolbens 5 bleibt der Dichtring 12 an die erste Saugdichtungsscheibe 9 angesaugt hängen und wird mit hochgezogen. Der Unterdruck öffnet im Haltekörper 24 das Ventil 26 zur Höhlung 25. Das Ventil 26 befindet sich auf der Ankuppelfläche 13.

Wenn man den Saugkolben 5 aufgesetzt auf den Haltekörper 24 niederdrücken wollte, würde sich im Saugrohr 4 im Kolbeninnenraum 6 ein Überdruck bilden. Um dies zu vermeiden, kann der Überdruck über die Ausnehmung 11 entlang dem Dichtring 12 entweichen. Die hat den Vorteil, dass "nachgepumpt" werden kann, ohne dass die Saugpumpe 1 abgenommen werden muss. Dieser Zustand ist in Fig. 6 gezeigt. Der Dichtring 12 liegt dann an der zweiten Saugdichtungsscheibe 10 an, geringfügig beanstandet von der ersten Saugdichtungsscheibe 9.

In Fig. 7 ist eine der beiden Ausnehmungen 11 in der zweiten Saugdichtungsscheibe 9 nochmals deutlich gezeigt. Der O-Ring ist hier noch nicht zwischen erster Saugdichtungsscheibe 9 und zweiter Saugdichtungsscheibe 10 aufgezogen. Gut erkennbar ist hier auch die abgerundete innere Kante 27 der ersten Saugdichtungsscheibe 9.

## Patentansprüche

1. Saugpumpe (1) umfassend ein Saugrohr (4), welches einen Kolbeninnenraum (6) aufweist, mit einer Saugrohröffnung (28) und einen im Saugrohr (4) längs einer Saugrohrwand (7) geführten Saugkolben (5),
wobei der Saugkolben (5) an einem Ende einen Kolbenkopf (8) mit Kolbendichtung (12) aufweist, die Kolbendichtung (12) sich dichtend innen an die Saugrohrwand (7) anlegt und der Kolbenkopf (8) mit Kolbendichtung (12) von der Saugrohröffnung (28) weg in dem Saugrohr (4) mit Kolbeninnenraum (6) längs eines Saugweges (21) verfahrbar ist,
wobei der Kolbenkopf (8) eine erste und eine zweite Saugdichtungsscheibe (9, 10) aufweist, wobei in der zweiten Saugdichtungsscheibe (10) vom Rand in Richtung auf das Zentrum der Saugdichtungsscheibe (10) wenigstens eine Ausnehmung (11) eingebracht ist, zwischen den Saugdichtungsscheiben (9, 10) die Kolbendichtung (12) in Form eines Dichtrings angeordnet ist, der sich beim Herausfahren längs des Saugweges abdichtend an die erste Saugdichtungsscheibe (9) anlegt und beim Hereinfahren des Kolbenkopfes (8) an die zweite Saugdichtungsscheibe (10), so dass etwaige gestaute Luft entlang des Dichtungsrings im Bereich der Ausnehmung (11) entweichen kann, **dadurch gekennzeichnet, dass**
das Saugrohr (4) am Ende des Saugweges (23) einen oder mehrere Belüftungs-Durchbrüche (19) in der Saugrohrwand (7) aufweist und die Kolbendichtung (12) an den Belüftungs-Durchbrüchen (19) vorbeiführbar ist, so dass auf einen Stoß Umgebungsluft in den Kolbeninnenraum (6) des Saugrohrs (4) einströmt.

2. Saugpumpe gemäß Anspruch 1, wobei die Saugrohrwand (7) am Ende des Saugweges (23) zwei bis vier Entlüftungs-Durchbrüche (19) aufweist.

3. Saugpumpe gemäß zumindest einem der Ansprüche 1 oder 2, wobei das Saugrohr (4) an einem Ende einen Anschlag (17) aufweist, der gegen den Kolbenkopf (8) anschlägt, wenn die Kolbendichtung (12) die Belüftungs-Durchbrüche (19) passiert hat.

4. Saugpumpe gemäß Anspruch 3, wobei durch eine Öffnung des Anschlags (17) eine Kolbenzugstange (15) geführt ist und diese Kolbenkopf (8) und Handgriff (18) verbindet.

5. Saugpumpe gemäß Anspruch 1, wobei am Anfang des Saugweges (21) Entlüftungs-Durchbrüche vorgesehen sind, die außenseitig mit einer elastischen Gummimanschette verschlossen sind.

6. Set aufweisend die Saugpumpe (1) nach einem der vorherigen Ansprüche und eine Unterdruck-Haltevorrichtung mit Ventil (26), die im Bereich des Ventils (26) mit der Saugrohröffnung (28) der Saugpumpe (1) koppelbar ist.

7. Set nach Anspruch 6, wobei die Unterdruck-Haltevorrichtung aufweist:
- einen Haltekörper (2), der als Unterdruckkammer eine Höhlung (25) ausbildet, wobei in der Unterdruckkammer nach dem Anlegen an die Anlagefläche (3) ein Unterdruck erzeugbar ist,
- zumindest eine Dichtung (29), die die Unterdruckkammer nach außen hin gasdicht gegen die Anlagefläche (3) verschließt und vorzugsweise umlaufend in dem Haltekörper (2) eingelassen ist,
- zumindest eine Öffnung als Ende einer Verbindung von Unterdruckkammer mit äußerer Umgebung mit zumindest einem Ventil (26), welches ein gasdichtes Schließen und Öffnen der Verbindung Unterdruckkammer mit äußerer Umgebung gewährleistet, und
- Mittel zum Herstellen einer lösbaren, im Wesentlichen gasdichten Kupplung von der Saugrohröffnung (27) der Saugpumpe (1) mit der Unterdruck-Haltevorrichtung im Bereich des Ventils (26) zum Erzeugen eines Unterdruckes.

8. Verfahren zum Befestigen einer Unterdruck-Haltevorrichtung (2) mittels der Saugpumpe (1) nach einem der Ansprüche 1 bis 5 an eine Anlagefläche (3) umfassend folgende Schritte:
- Aufsetzen der Unterdruck-Haltevorrichtung (2) auf die Anlagefläche (3),
- Herstellen einer lösbaren, im Wesentlichen gasdichten Kupplung von der nach außen gerichteten Öffnung der Unterdruck-Haltevorrichtung (2) aufweisend das Ventil (26) mit der Saugpumpe (1), und
- Erzeugen eines Unterdruckes in dem Kolbeninnenraum (6) der Saugpumpe (1) durch zumindest einen Saugzug und damit auch in der Unterdruck-Haltevorrichtung (2).

9. Verfahren nach Anspruch 8, wobei die Unterdruck-Haltevorrichtung (2) und die Saugpumpe (1) Teil eines Sets nach Anspruch 6 oder 7 sind.

## Claims

1. A suction pump (1) comprising a suction tube (4) having a piston interior (6), the suction tube (4) having a suction tube opening (28) and a suction piston (5) that is guided in the suction tube (4) along a suction tube wall (7), wherein
at one end, the suction piston (5) comprises a piston head (8) with a piston seal (12), the piston seal (12) sealingly lies against the inside of the suction tube wall (7) and the piston head (8) with the piston seal (12) can be moved away from the suction tube opening (28) in the suction tube (4) having the piston interior (6) along a suction path (21), wherein the piston head (8) comprises a first and a second suction sealing washer (9, 10), wherein at least one recess (11) is introduced into the second suction sealing washer (10) from the edge toward the center of the suction sealing washer (10), the piston seal (12) is arranged between the suction sealing washers (9, 10) in the form of a sealing ring which sealingly lies against the first suction sealing washer (9) when traveling out along the suction path, and lies against the second suction sealing washer (10) when the piston head (8) is traveling in so that any accumulated air along the sealing ring can escape in the region of the recess (11), **characterized in that** the suction tube (4) at the end of the suction path (23) comprises one or more vent openings (19) in the suction tube wall (7), and the piston seal (12) can be moved past the vent openings (19) so that ambient air flows into the piston interior (6) of the suction tube (4) with one puff.

2. The suction pump according to claim 1, wherein the suction tube wall (7) has two to four vent openings (19) at the end of the suction path (23).

3. The suction pump according to claim 1 or 2, wherein the suction tube (4) has a stop (17) at one end that strikes the piston head (8) when the piston seal (12) has passed the vent openings (19).

4. The suction pump according to claim 3, wherein a piston pull rod (15) is guided through an opening of the stop (17), and this connects the piston head (8) and grip (18).

5. The suction pump according to claim 1, wherein vent openings are provided at the beginning of the suction path (21) which are closed to the outside with an elastic rubber sleeve.

6. A set having the suction pump (1) according to one of the preceding claims and a negative-pressure retaining device with a valve (26) that can be coupled to the suction tube opening (28) of the suction pump (1) in the region of the valve (26).

7. The set according to claim 6, wherein the negative-pressure retaining device has:
- a retaining body (2) which forms a cavity (25) as the negative pressure chamber, wherein a negative pressure can be produced in the negative pressure chamber after being applied to the contact surface (3),
- at least one seal (29) which seals the negative pressure chamber gas-tight to the outside against the contact surface (3) and preferably is peripherally recessed in the retaining body (2),
- at least one opening as an end of a connection of the negative pressure chamber to the outside environment with at least one valve (26) that ensures gas-tight closing and opening of the connection of the negative pressure chamber to the external environment, and
- means for establishing a releasable substantially gas-tight coupling of the suction tube opening (27) of the suction pump (1) to the negative-pressure retaining device in the region of the valve (26) for producing a negative pressure.

8. A method for fastening a negative-pressure retaining device (2) by means of the suction pump (1) according to one of claims 1 to 6 to a contact surface (3), comprising the following steps:
- place the negative-pressure retaining device (2) on the contact surface (3),
- establish a releasable substantially gas-tight coupling of the outwardly-directed opening of the negative-pressure retaining device (2) having the valve (26) to the suction pump (1), and
- produce a negative pressure in the piston interior (6) of the suction pump (1) by at least one suction pull, and hence also in the negative-pressure retaining device (2).

9. The method according to claim 8, wherein the negative-pressure retaining device (2) and the suction pump (1) are part of a set according to claim 6 or 7.

## Revendications

1. - Pompe d'aspiration (1) comportant un tube d'aspiration (4), ayant un espace intérieur de piston (6), avec une ouverture de tube d'aspiration (28) et un piston d'aspiration (5) guidé dans le tube d'aspiration (4) le long d'une paroi de tube d'aspiration (7),
le piston d'aspiration (5) présentant à une extrémité une tête de piston (8) ayant une garniture de piston (12), la garniture de piston (12) s'appliquant de manière étanche contre l'intérieur de la paroi de tube d'aspiration (7) et la tête de piston (8) avec la garniture de piston (12) pouvant être éloignée de l'ouverture de tube d'aspiration (28) dans le tube d'aspiration (4) avec l'espace intérieur de piston (6) le long d'un trajet d'aspiration (21),
la tête de piston (8) présentant un premier et un second disque d'étanchéité d'aspiration (9, 10), au moins un évidement (11) étant introduit dans le second disque d'étanchéité d'aspiration (10), du bord vers le centre du disque d'étanchéité d'aspiration (10), la garniture de piston (12) étant disposée sous la forme d'une bague d'étanchéité entre les disques d'étanchéité d'aspiration (9, 10), laquelle bague d'étanchéité s'applique de manière étanche contre le premier disque d'étanchéité d'aspiration (9) lors d'une sortie le long du trajet d'aspiration et contre le second disque d'étanchéité d'aspiration (10) lors d'une rentrée de la tête de piston (8), de telle sorte que tout air accumulé le long de la bague d'étanchéité (12) peut s'échapper dans la région de l'évidement (11), **caractérisée par le fait que** le tube d'aspiration (4) à l'extrémité du trajet d'aspiration (23) présente une ou plusieurs ouvertures de ventilation (19) dans la paroi de tube d'aspiration (7) et la garniture de piston (12) peut être déplacée au-delà des ouvertures de ventilation (19) de telle sorte que d'un coup l'air ambiant s'écoule dans l'espace intérieur de piston (6) du tube d'aspiration (4).

2. - Pompe d'aspiration selon la revendication 1, dans laquelle la paroi de tube d'aspiration (7) présente deux à quatre ouvertures de ventilation (19) à l'extrémité du trajet d'aspiration (23).

3. - Pompe d'aspiration selon au moins l'une des revendications 1 ou 2, dans laquelle le tube d'aspiration (4) présente à une extrémité une butée (17) qui bute contre la tête de piston (8) lorsque la garniture de piston (12) a passé les ouvertures d'aération (19).

4. - Pompe d'aspiration selon la revendication 3, dans laquelle une tige de traction de piston (15) est guidée à travers une ouverture de la butée (17) et celle-ci relie tête de piston (8) et poignée (18).

5. - Pompe d'aspiration selon la revendication 1, dans laquelle, au début du trajet d'aspiration (21), sont prévues des ouvertures de ventilation qui sont fermées côté extérieur par un manchon en caoutchouc élastique.

6. - Ensemble présentant la pompe d'aspiration (1) selon l'une des revendications précédentes et un dispositif de maintien par dépression ayant une soupape (26), qui peut être couplé à l'ouverture de tube d'aspiration (28) de la pompe d'aspiration (1) dans la région de la soupape (26).

7. - Ensemble selon la revendication 6, dans lequel le dispositif de maintien par dépression comprend :
- un corps de maintien (2) qui forme une cavité (25) en tant que chambre de dépression, une dépression pouvant être produite dans la chambre de dépression après qu'elle ait été appliquée contre la surface de contact (3) ;
- au moins un joint d'étanchéité (29), qui scelle la chambre de dépression de manière étanche aux gaz vers l'extérieur contre la surface de contact (3) et qui est, de préférence, encastré de manière périphérique dans le corps de maintien (2) ;
- au moins une ouverture en tant qu'extrémité d'une liaison de la chambre de dépression à l'environnement extérieur avec au moins une soupape (26), laquelle assure des fermeture et ouverture étanches aux gaz de la liaison de la chambre de dépression à l'environnement extérieur ; et
- des moyens pour établir un accouplement détachable, sensiblement étanche aux gaz, de l'ouverture de tube d'aspiration (27) de la pompe d'aspiration (1) avec le dispositif de maintien par dépression dans la région de la soupape (26) pour la production d'une dépression.

8. - Procédé de fixation d'un dispositif de maintien par dépression (2) au moyen de la pompe d'aspiration (1) selon l'une des revendications 1 à 5 sur une surface de contact (3), comportant les étapes suivantes :
- placer le dispositif de maintien par dépression (2) sur la surface de contact (3) ;
- établir un accouplement détachable, sensiblement étanche aux gaz, de l'ouverture dirigée vers l'extérieur du dispositif de maintien par dépression (2) présentant la soupape (26) avec la pompe d'aspiration (1) ; et
- produire une dépression dans l'espace intérieur de piston (6) de la pompe d'aspiration (1) par au moins une traction d'aspiration et par là également dans le dispositif de maintien par dépression (2).

9. - Procédé selon la revendication 8, dans lequel le dispositif de maintien par dépression (2) et la pompe d'aspiration (1) font partie d'un ensemble selon l'une des revendications 6 ou 7.
